# EUROPEAN PATENT APPLICATION

(11) **EP 3 904 192 A1**
(43) Date of publication of application: **03.11.2021**
(21) Application number: 19905213.5
(22) Date of filing: 13.09.2019
(51) Int. Cl.: B62K 19/08, B62K 3/02, B21D 28/00

(54) **METHOD FOR MANUFACTURING A PRESSED BICYCLE FRAME**

(30) Priority: 28.12.2018 RU 2018147096
(71) Applicant: Buzov, Aleksandr Ivanovich, Moscow, 117218 (RU)
(72) Inventor: Buzov, Aleksandr Ivanovich, Moscow, 117218 (RU)
(74) Representative: Sach, Greg Robert
(86) International application number: PCT/RU2019/000637
(87) International publication number: WO 2020/139130

(57) **Abstract**

The invention relates to the eld of the bicycle industry and concerns a method for manufacturing and building frames for bicycles or kick scooters. The technical result of the invention is to reduce the time and increase the productivity of bicycle frame manufacture, which is achieved by mounting a press die in a press tool, then mounting a blank made of a sheet material between the mating parts of the press die, then activating the press tool and carrying out a pressing operation in which the sheet material blank is simultaneously cut and deformed in accordance with the press die, then bending the lateral portions of the blank of the frame so that apertures for a bottom bracket and dropouts for securing the rear wheel axle are disposed in axial alignment with one another, and also rounded portions on the ends of tongues form a head tube.

## Description

The invention relates to the field of bicycle industry and relates to a method of manufacturing and structural design of frames for bicycles or scooters. [B62K 3/02]

The prior art is known FRAME BIKES [RU 114023 U1, publ. 03/10/2012], comprising a steering cup, interconnected upper, lower and seat posts, a carriage assembly and rear wheel attachment feathers, characterized in that the seat post is bifurcated at the attachment point to the carriage assembly with the possibility of entering the seat post pipe the rear wheel of the bicycle, while the carriage assembly is maximally offset to the center of the rear wheel.

Also known in the prior art FRAME BIKES (OPTIONS) [RU 140945 U1, publ. 05/20/2014], comprising a carriage bushing to which a lower front pipe connected to the steering pipe and a lower rear feather connected to the rear wheel hub mounting brackets, a seat post located obliquely towards the hub mounting brackets are connected the rear wheel and to which in its upper part are connected the upper front pipe made in an arcuate curved upward direction, connected to the steering pipe in the section above the lower front pipe, and the upper rear feather connected with the indicated brackets, with one end of the seat post located above the attachment area of the upper front pipe, characterized in that the seat post is made curved and consists of two sections, the rst of which is made rectilinear, and its longitudinal axis is located on the line crossing the lower rear feather in the area between the carriage bushing and the mounting brackets rear wheel hubs m from 64 ° to 71 °, and the second section is located at an obtuse angle to the first and its longitudinal axis is located on the line crossing the carriage bushing, with the other end the seat tube is connected to the carriage bushing, and the lower front tube is at least part of its length made arcuate in the direction opposite to the arcuate curvature of the upper front tube.

The disadvantage of these analogues is that the technology of their production is based on the assembly of a tubular spatial frame from pipes of various diameters and alloys by electric gas welding, the disadvantage of which is the low productivity of manufacturing bicycle frames due to the complexity of the manufacturing process, as well as the insufficient reliability of using tubular designs.

The closest in technical essence is the BIKE FRAME [RU 2452649 C1, publ. June 10, 2012], comprising: the main part of the frame structure, the front strut, which is a continuation of the main part of the frame structure and adapted for installing the bicycle steering fork with the steering wheel and the front wheel, the seat post, adapted for installing the bicycle saddle, a pair of rear feathers, which are a continuation of the main part of the frame structure and adapted for mounting the rear wheel of the bicycle and for installing pedals of the bicycle, chain transmission and brakes, characterized in that the main part of the frame structure together with the front rack and rear feathers is made of carbon fiber in the form of a monoblock having a curved section with a generatrix in the form of an arc of a circle in the area between the front strut and the rear wheel attachment point in the rear feathers and having horizontally spaced portions of the rear feathers between the rear wheel attachment point and the pedal attachment point, wherein said curved monoblock section is in the region of the main part, the front strut a, the rear feathers and the seat post have flattened lateral sections on the sides, the front post is tangential to the generatrix, the seat post is made on the specified curved section of the monoblock and has a pocket protruding to the bottom for mounting the saddle with the ability to control the depth of the seat.

The main technical problem of the prototype is the need to manufacture a frame in the form of a carbon fiber monoblock, in the wet method, in which the carbon ber is laid in a mold, impregnated with epoxy resin, excess resin they are removed in vacuo or under pressure, and the remaining resin is polymerized either by dry method, in which products are formed from carbon fiber blanks under pressure and heating. In this case, the manufacture of a bicycle frame is carried out using embedded parts: aluminum cups of the steering column, bushings with an internal thread for the carriage. This technology of manufacturing a bicycle frame is characterized by considerable laboriousness and duration, as well as extremely low productivity.

The objective of the invention is to eliminate the disadvantages of the prototype.
The technical result of the invention is to reduce the time and increase the productivity of manufacturing a bicycle frame.

The specified technical result of the invention is achieved due to the fact that the claimed method of manufacturing a bicycle stamped frame, characterized in that the mold is installed in the mold, after which the blank of sheet material is installed between the mating parts of the mold, then the mold is activated and a stamping operation is performed, in which the blank of the sheet material is cut and deformed at the same time in accordance with the mold, then the side parts of the frame blank are bent so that the holes for the carriage and the brackets for mounting the rear wheel axis are aligned with each other, and also rounded on the ends of the petals formed a steering cup.

In particular, a press die is made in accordance with a bicycle frame model.
In particular, the mating surfaces of the semi-cylindrical bends are welded.
In particular, the side parts of the frame blank are bent along the central stiffener.
In particular, a hydraulic or electromechanical press is used as a press die.
In particular, at the final stage of manufacture, the frame is painted or polished.

### A brief description of the drawings.

Figure 1 shows a General view of a bicycle frame according to the first embodiment.
Figure 2 shows a view A of the bicycle frame according to the first embodiment.
FIG. 3 shows a view B of the bicycle frame according to the first embodiment.
Figure 4 shows a view (side) of the bicycle frame according to the first embodiment.
Figure 5 shows a section GG of the bicycle frame according to the first embodiment.
6 shows a variant of a bicycle with a bicycle frame according to the first embodiment.
7 shows a side view of a bicycle frame according to the second embodiment.
On Fig shows a section aa of the bicycle frame according to the second embodiment.
FIG. 9 is a side view of a bicycle with a bicycle frame according to a second embodiment.
Figure 10 shows a sheet material with a marking for stamping blanks of bicycle frames according to the second embodiment.
11 shows a blank of a bicycle frame according to the first embodiment.

The figures indicate: 1 - a bicycle frame according to the first embodiment, 2 - a longitudinal U-shaped pro3le, 3 - stiffeners, 4 - petals, 5 - half-cylindrical bends, 6 - a steering cup, 7 - side frames according to the first embodiment, 8 - coaxial holes for the carriage, 9 - brackets for mounting the axis of the rear wheel, 10 - holes for mounting the trunk and / or wings, 11 - steering fork, 12 - steering wheel, 13 - axis of the front wheel, 14 - front wheel, 15 - carriage, 16 - front sprocket, 17 - pedals, 18 - rear axle, 19 - rear wheel, 20 - disc brake, 21 - seat post, 22 - seat post, 23 - saddle, 24 - bicycle frame according to the second embodiment, 25 - longitudinal U-shaped profile with convex lateral parts, 26 - side frames according to the second embodiment, 27 - protrusions in the lower part of the side frames, 28 - sheet material, 29 - markings for stamping the bicycle frame blanks according to the second embodiment, 30 - bend folding lines cycling the frames.

### The implementation of the invention.

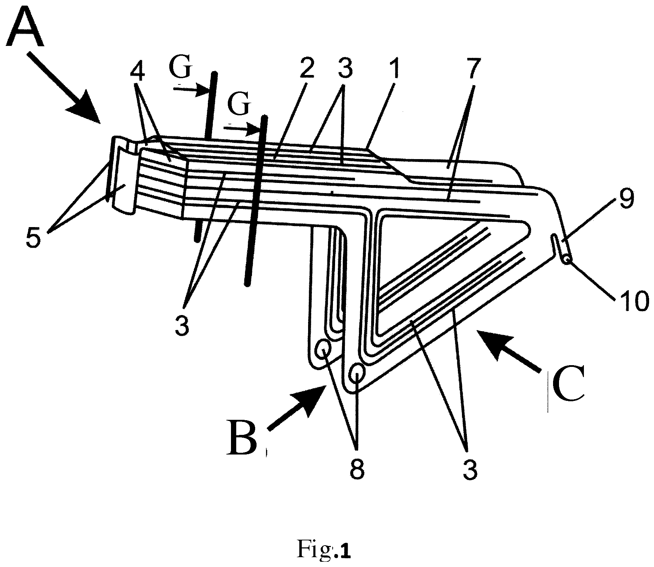

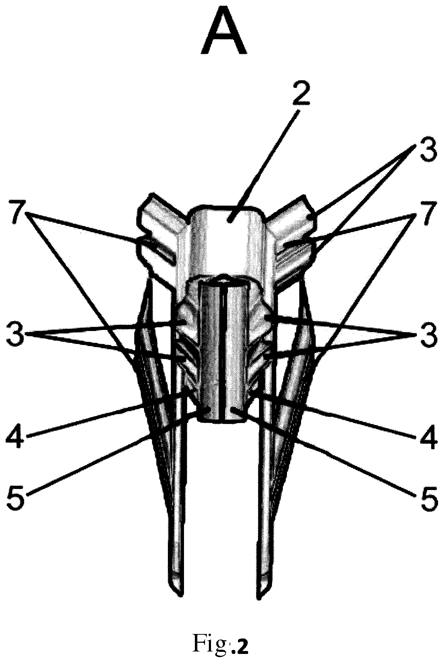

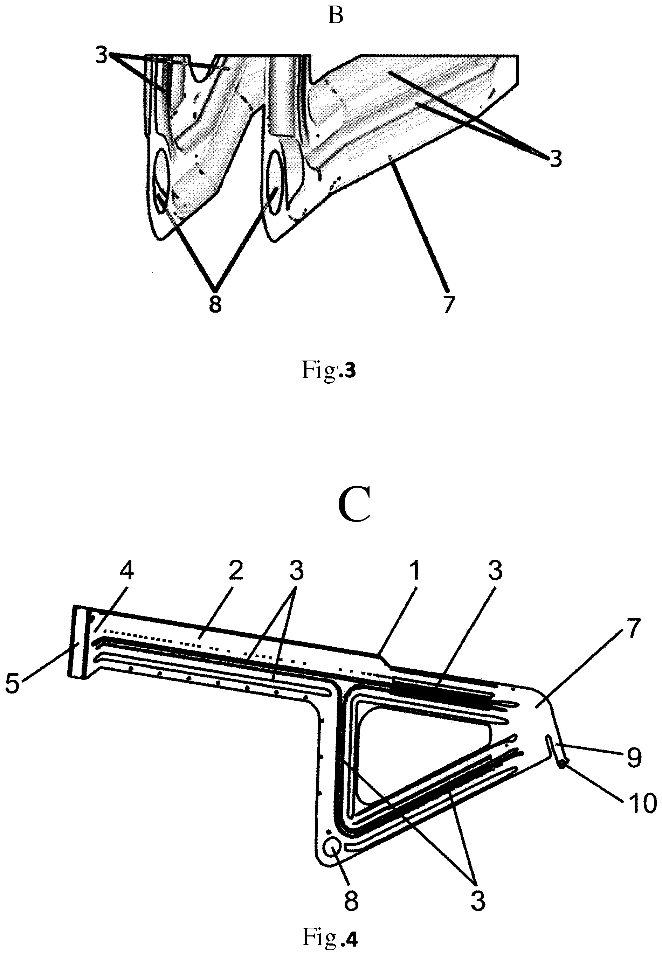

The claimed method can be made of various options for stamped bicycle frames, each of which corresponds to the method. The bicycle frame according to the first embodiment 1 (see FIGS. 1-5) can be made in the form of a sheet metal product and contains a longitudinal U-shaped profile 2, on the lateral parts of which are made longitudinal stiffeners B. In front, the side parts of pro4le 1 are made longer than the top and form the petals 4, which are bent to each other, while at the ends of the petals 4 there are vertical semi-cylindrical bends 5, the connection of which forms the steering gear 6.

Behind the side parts of the profile 2 are articulated with the upper corners of the side frames 7 made in the shape of triangles, so that the upper parts of the side frames 7 are extensions of the side parts of the U-shaped profile 2. Along the sides of the side frames 7 are made ribs 3, while the front at the base of the corners of the side frames 7, coaxial holes 8 are made for the carriage 15, and behind in the base of the corners of the side frames 7 are brackets 9 for fixing the axis 18 of the rear wheel 19 and coaxial holes 10 for mounting the trunk and / or wing.

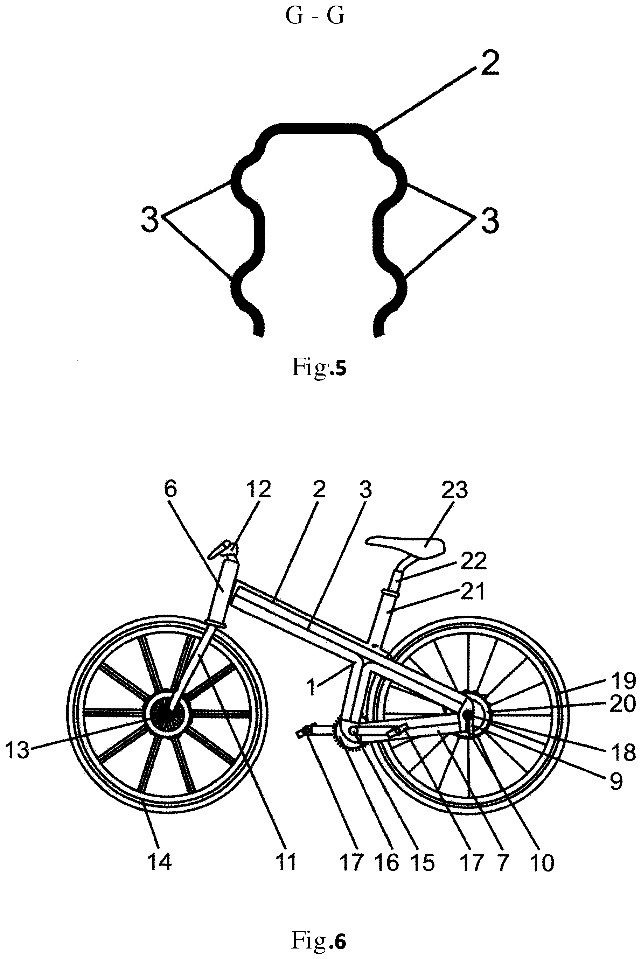

A bicycle (see FIG. 6) with a bicycle frame according to the first embodiment 1, in accordance with the claimed technical solution, comprises a bicycle frame 1, in the steering cup 6 of which is placed the steering fork 11, to the top of which the steering wheel 12 is attached, and from below the axle 13 with the front wheel 14.

In the holes 8 there is a carriage 15 with a front sprocket 16 and pedals 17.
In the brackets 9, the rear axle 18 of the wheel 19 is fixed, to which the disc brake 20 is also attached.

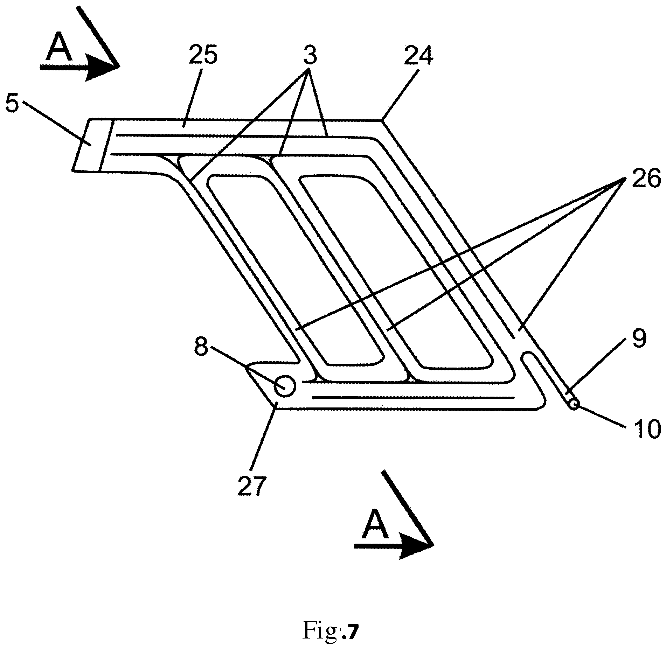

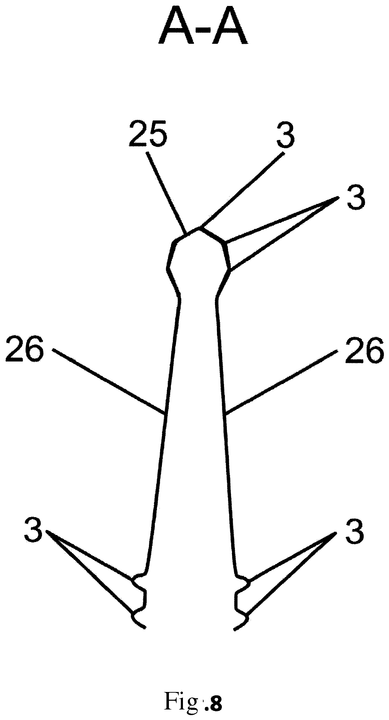

At the junction of the lateral parts of the U-shaped pro4le 2 and the side frames 7, the seat post 21 is located for installing the seat post 22 of the seat 23. The bicycle frame according to the second embodiment 24 (see Fig. 7) is made in the form of a sheet material and contains a longitudinal U-shaped profile 25 with curved sides, the cross section of which is made in the form of a convex polyhedron (see Fig. 8), whose faces are stiffeners 3.

On the front, the side parts of the profile 25 are made longer than the upper one and form petals 4, which are bent to each other, while at the ends of the petals 4 there are vertical semi-cylindrical bends 5, the connection of which forms the steering gear 6. The side frames 26 according to the second embodiment are made in the form of two articulated parallelograms, in the front lower corners of which there are protrusions 27. In the protrusions 27 there are coaxial holes 8 for the carriage 15. Stiffeners 3 are made along the sides of the side frames 26.

At the base of the lower rear corners of the side frames 26, brackets 9 are made for fixing the axis 18 of the rear wheel 19 and coaxial holes 10 are for mounting the trunk and / or wing.

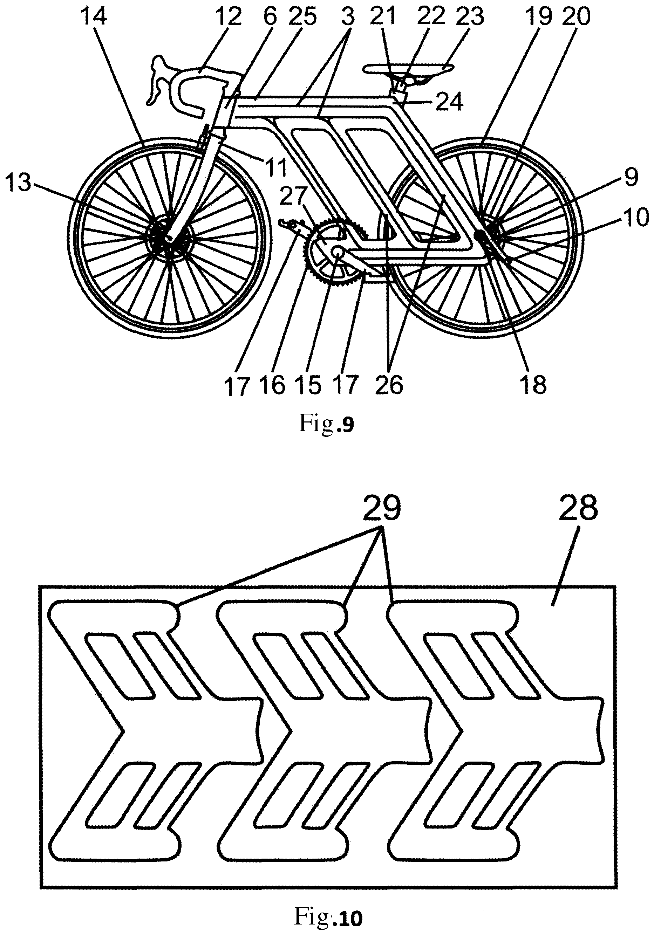

A bicycle (see Fig. 9) with a bicycle frame 24 according to the second embodiment, in accordance with the claimed technical solution, comprises a bicycle frame 24, in the steering cup 6 of which is placed the steering fork 11, on top of which the steering wheel 12 is attached, and the axle 13 with the front wheel fourteen.

In the holes 8 there is a carriage 15 with a front sprocket 16 and pedals 17.
In the brackets 9, the rear axle 18 of the wheel 19 is fixed, to which the disc brake 20 is also attached.
At the junction of the lateral parts of the U-shaped pro5le 25 and the side frames 26, a seat tube 21 is located for mounting the seat post 22 of the seat 23.

Bicycle frames in accordance with the claimed technical solution are made of sheet material by stamping a metal sheet, for example, from an alloy of titanium and aluminum or structural steels. This technology for the production of a bicycle frame from sheet metal is based on the processes of plastic deformation of a metal without heating it using special press dies. This method of plastic deformation of parts is widely used for the manufacture of complex shapes with great accuracy, which allows using a single technological stamping operation to immediately get a bicycle frame completely ready for assembling a bicycle.

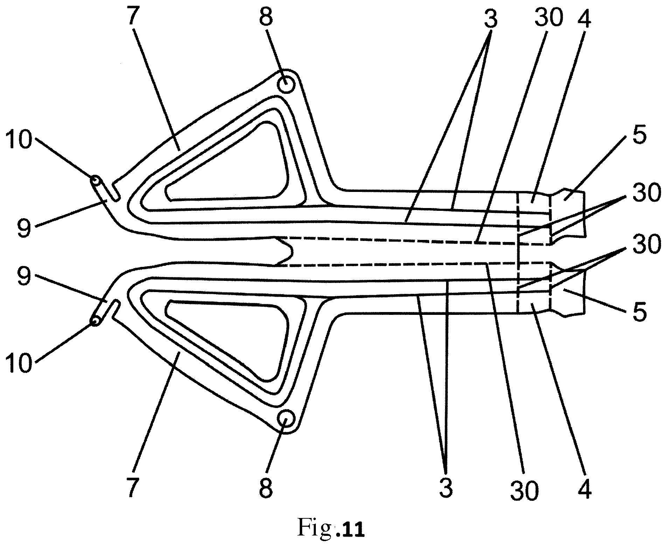

Before the manufacture of stamped bicycle frames, a mold is designed and manufactured in accordance with the model of the bicycle frame, and the mold should provide (on the example of the first embodiment) blank cutting (see Figure 11), the formation of side frames 7, holes 8, brackets 9 with holes 10, stiffeners 3, as well as petals 4 with half-cylindrical bends 5. The use of the mold allows the use of different sheet materials for the production of bicycle frames without replacing the equipment.

An example of the location of the blanks for bicycle frames according to the second embodiment is shown in FIG. 10.

To stamp the blanks of the bicycle frame, a mold is installed in the mold and sheet material is placed between the counterparts of the mold, then the mold is activated and the stamping operation described above is performed. After the preparation of the bicycle frame blank, along the lines 28 (see FIG. 11), the petals 4 are bent so that a steering cup 6 is formed from the semi-cylindrical bends 5.

Then, along the lines 28, the side parts of the pro6le of the U-shaped pro6le 2 are bent with the side frames 7 so that the holes 8 for the carriage 15 and the brackets 9 for fixing the axis 18 of the rear wheel 19 are aligned with each other. To increase the strength of the steering glass 6 can weld the counter surfaces of the semi-cylindrical bends 5.

After manufacturing the blanks of the bicycle frame 24 according to the second embodiment, it is bent along the central and lateral stiffeners 3 (see Fig. 8). After the formation of the bicycle frame 1, it is painted or polished if the bicycle frame is made of titanium alloy.

Then, a steering fork 11 is mounted in the steering glass, to which the steering wheel 12 is attached, and the front axle 13 with the wheel 14. In the hole 8, the carriage 15 is mounted with the front sprocket 16, while the pedals 17 are attached to the carriage 15. The rear axle 18 is mounted in the bracket 9. with a wheel 19, a disc brake 20 and a rear sprocket (not shown in the drawings). At the junction of the lateral parts of the U-shaped profile 2 and the side frames 7, the seat post 21 is mounted, in which the seat post 22 with the saddle 23 is installed.

To stamp the blanks of the bicycle frame, a mold is installed in the mold and sheet material is placed between the counterparts of the mold, then the mold is activated and the stamping operation described above is performed. After the preparation of the bicycle frame blank, along the lines 28 (see FIG. 11), the petals 4 are bent so that a steering cup 6 is formed from the semi-cylindrical bends 5.

Then, along the lines 28, the side parts of the profile of the U-shaped profile 2 are bent with the side frames 7 so that the holes 8 for the carriage 15 and the brackets 9 for fixing the axis 18 of the rear wheel 19 are aligned with each other. To increase the strength of the steering glass 6 can weld the counter surfaces of the semi-cylindrical bends 5.

After manufacturing the blanks of the bicycle frame 24 according to the second embodiment, it is bent along the central and lateral stiffeners 3 (see Fig. 8). After the formation of the bicycle frame 1, it is painted or polished if the bicycle frame is made of titanium alloy.

Then, a steering fork 11 is mounted in the steering glass, to which the steering wheel 12 is attached, and the front axle 13 with the wheel 14. In the hole 8, the carriage 15 is mounted with the front sprocket 16, while the pedals 17 are attached to the carriage 15. The rear axle 18 is mounted in the bracket 9. with a wheel 19, a disc brake 20 and a rear sprocket (not shown in the drawings). At the junction of the lateral parts of the U-shaped profile 2 and the side frames 7, the seat post 21 is mounted, in which the seat post 22 with the saddle 23 is installed.

The seat post 21 can be mounted using a welded joint. The claimed technical result of the invention is achieved due to the fact that the bicycle frame is made by stamping using a specialized mold, while:
- it is possible to manufacture bicycle frames using one tool from various materials (titanium and aluminum alloys, structural steels);
- the design of a stamped bicycle frame allows you to reduce weight, increase rigidity and strength of the frame;
   reduced manufacturing costs and the cost of production of a stamped bicycle frame;
- increased environmental friendliness of production and reduced detrimental effects on the environment, by reducing energy costs.

In 2018, the applicant manufactured a stamped bicycle frame in accordance with the claimed technical solution, the pilot operation of which confirmed the achievement of the claimed technical result.

## Claims

1. A method of manufacturing a bicycle stamped frame, **characterized in that** a mold is installed in the mold, after which a blank of sheet material is installed between the mating parts of the mold, then the mold is activated and a stamping operation is performed, in which both deform the blank of the sheet material in accordance with the mold, then bend the side parts of the blank of the frame so that the holes for the carriage and the brackets for mounting the rear wheel axis are aligned with each other, and the roundings at the ends of the petals form a steering cup.

2. The method according to claim 1, **characterized in that** the press stamp is made in accordance with the model of the frame of the bicycle.

3. The method according to claim 1, **characterized in that** they produce welding of the mating surfaces of the semi-cylindrical bends.

4. The method according to claim 1, **characterized in that** the side parts of the frame blank are bent along the central stiffener.

5. The method according to claim 1, **characterized in that** as a press stamp using a hydraulic or electro-mechanical press stamp.

6. The method according to claim 1, **characterized in that** at the final stage of manufacturing paint or polish the frame.
